# FASCICULE DE BREVET EUROPEEN

(11) **EP 2 230 211 B1**
(45) Date de publication et mention de la délivrance du brevet: **04.09.2013**
(21) Numéro de dépôt: 09356017.5
(22) Date de dépôt: 09.03.2009
(51) Int. Cl.: C02F 1/463, C02F 1/467, C02F 1/461, C02F 3/30, C02F 9/00

(54) **Installation et procédé de pré-traitement d'eau brute**
Anlage und Verfahren zur Vorbehandlung von Rohwasser
Installation and method for the pre-processing of raw water

(43) Date de publication de la demande: 22.09.2010
(73) Titulaire: F-Tec Systems SA, 1870 Monthey (CH)
(72) Inventeur: Fresnel, Jean-Marie, 01710 Thoiry (FR)
(74) Mandataire: Stona, Daniel

(56) Documents cités:
- EP-A1- 0 595 178
- WO-A1-03/065798
- WO-A1-03/065798
- CA-A1- 2 511 091
- FR-A1- 2 459 067
- FR-A1- 2 740 129
- JP-A- 51 150 866
- JP-A- 56 056 287
- US-A- 4 014 766
- US-A- 5 578 200
- US-A- 5 578 200
- US-A1- 2005 167 285
- US-A1- 2006 000 784
- US-A1- 2006 000 784
- US-A1- 2007 034 567
- US-A1- 2007 218 537
- US-A1- 2007 218 537
- KHOUFI ET AL: "Detoxification of olive mill wastewater by electrocoagulation and sedimentation processes", JOURNAL OF HAZARDOUS MATERIALS, ELSEVIER, vol. 142, no. 1-2, 19 March 2007 (2007-03-19), pages 58-67, XP005933639, ISSN: 0304-3894, DOI: 10.1016/J.JHAZMAT.2006.07.053

## Description

L'invention concerne une installation et un procédé de pré-traitement d'eau brute destinée à produire une eau qui pourra ensuite être facilement traitée pour donner une eau potable ou une eau dite « technique », c'est-à-dire impropre à la consommation mais pouvant trouver des utilisations ménagères, agricoles et industrielles, telles que le nettoyage, le lavage, la lessive, la chasse d'eau, l'arrosage d'un jardin ou l'irrigation.

L'invention a trait également à des dispositifs et procédés auxiliaires susceptibles d'être utilisés dans une installation ou un procédé de pré-traitement ou de purification d'eau brute.

### Arrière-plan de l'invention

Il y a plus de dix ans déjà, l'inventeur de la présente demande de brevet a mis au point le procédé de pré-traitement d'eaux brutes faisant l'objet de la demande internationale n° WO 97/14659.

Ce procédé comporte une étape de désinfection poussée par électrolyse en courant alternatif de particules de fer qui peuvent être contenues dans des paniers de titane ou de zirconium recouverts d'un catalyseur et agités mécaniquement ou au moyen d'ultrasons.

L'inventeur a poursuivi ses recherches en vue d'améliorer son procédé et d'intégrer les nouvelles normes en matière d'eau potable, en particulier la norme européenne n° DE 98/83/CE, ainsi que les dernières recommandations de l'Organisation Mondiale de la Santé (OMS) dans ce domaine.

Il est ainsi parvenu à mettre au point de nouveaux procédés, dispositifs et installations capable de pré-traiter des eaux d'une qualité encore plus dégradée que précédemment, car plus chargées en boues, sels, nitrites, composés organiques et/ou métaux lourds.

### Exposé sommaire de l'invention

Suivant un premier aspect, l'invention se rapporte à un dispositif auxiliaire selon le point 1 suivant :
1.- Dispositif auxiliaire comprenant une cuve contenant :
   - une solution aqueuse contenant de l'hypochlorite de sodium et
   - une anode comprenant un récipient métallique contenant des particules de fer dont certaines au moins sont immergées dans la solution aqueuse contenant de l'hypochlorite de sodium et
   - une cathode ayant au moins une partie immergée dans la solution aqueuse contenant de l'hypochlorite de sodium,
   ce dispositif se caractérisant en ce qu'au moins une portion de la partie immergée de la cathode se trouve au-dessus de certaines au moins des particules de fer immergées.

Un tel dispositif a l'avantage de permettre une meilleure répartition des lignes de courant, ce qui améliore son fonctionnement par rapport à l'étape de désinfection poussée mise en oeuvre dans le procédé de la demande internationale précitée n° WO 97/14659. De plus, du fait qu'il n'a pas besoin de comporter plus d'un récipient métallique, il est plus simple à réaliser.

Des caractéristiques avantageuses du dispositif auxiliaire du point 1 précité sont indiquées dans les points 2 à 8 suivantes :
2.- Dispositif auxiliaire selon le point 1, dans lequel la cathode a une forme sensiblement plane.
3.- Dispositif auxiliaire selon le point 2, dans lequel la cathode se présente sous la forme d'une grille.
4.- Dispositif auxiliaire selon l'un des points 1 à 3, dans lequel le récipient métallique est au moins partiellement en titane, en zirconium, en alliage de titane ou en alliage de zirconium.
5.- Dispositif auxiliaire selon l'un des points 1 à 4, dans lequel la cathode comprend, sur sa ou ses face(s) tournée(s) vers les particules de fer, un élément de séparation, de préférence un matériau poreux isolant, en particulier un textile poreux, par exemple en polyéthylène ou en polypropylène.
6.- Dispositif auxiliaire selon l'un des points 1 à 5, comprenant en outre des moyens d'agitation du récipient métallique.
7.- Dispositif auxiliaire selon l'un des points 1 à 6, comprenant en outre un électro-aimant entourant le récipient métallique contenant les particules de fer.
8.- Dispositif auxiliaire selon l'un des points 1 à 7, dans lequel l'intérieur du récipient est au moins partiellement revêtu d'une couche de catalyseur, de préférence du palladium.

Le dispositif auxiliaire selon les points 1 à 8 peut être utilisé dans divers procédés, en particulier, dans des procédés de traitement ou de pré-traitement d'eau brute.

Il peut, par exemple, servir de dispositif auxiliaire pour la production d'un coagulant intervenant dans un processus global de traitement d'une eau brute. Il peut aussi être utilisé pour mettre en oeuvre un procédé auxiliaire, continu ou discontinu, de production d'un coagulant pour eau brute, dans lequel :
- on introduit une solution aqueuse d'hypochlorite de sodium dans la cuve du dispositif;
- on alimente en courant continu l'anode et la cathode du dispositif ;
- on laisse l'électrolyse du fer s'effectuer ; et
- on extrait de la cuve le coagulant.

Ce coagulant peut ensuite servir à traiter une eau brute.

Le dispositif précité peut aussi servir de dispositif auxiliaire pour le traitement d'une eau contenant de l'hypochlorite de sodium, provenant notamment d'un traitement préalable. Il peut également être utilisé pour mettre en oeuvre un procédé auxiliaire, continu ou discontinu, de traitement d'une eau contenant de l'hypochlorite de sodium, dans lequel :
- on introduit de l'eau à traiter contenant de l'hypochlorite de sodium dans la cuve du dispositif auxiliaire ;
- on alimente en courant continu l'anode et la cathode du dispositif auxiliaire ;
- on laisse l'électrolyse du fer s'effectuer ; et
- on extrait de la cuve l'eau traitée.

L'eau traitée obtenue peut ensuite subir des traitements supplémentaires, en vue, notamment, d'augmenter sa pureté.

Selon une variante avantageuse de ce procédé de traitement d'une eau contenant de l'hypochlorite de sodium, le courant continu est intermittent, de préférence haché régulièrement ou suivant un train d'impulsions, plus préférentiellement avec une fréquence de 0,1 à 1 Hz.

Selon une autre variante avantageuse, l'électro-aimant du dispositif mentionné au point 7 précité est relié à une source de courant alternatif.

Suivant un deuxième aspect, l'invention a pour objet un dispositif de filtration d'eau brute selon le point 16 suivant :
16.- Dispositif de filtration d'eau brute comportant un filtre biologique ayant une entrée et une sortie, **caractérisé en ce que** ce filtre biologique comprend un lit de filtration aérobie et un lit de filtration anaérobie reliés l'un à l'autre.

Ce dispositif de filtration peut être utilisé dans de nombreux procédés de filtration d'eau brute.

Des caractéristiques avantageuses du dispositif de filtration du point 16 précité sont indiquées dans les points 17 à 24 suivants :
17.- Dispositif selon le point 16, dans lequel les lits de filtration aérobie et anaérobie comprennent des fibres hydrophobes et oléophiles.
18.- Dispositif selon le point 17, dans lequel les fibres hydrophobes et oléophiles comprennent des fibres de polypropylène.
19.- Dispositif de filtration d'eau brute selon l'un des points 16 à 18, dans lequel l'un des lits de filtration aérobie et anaérobie est relié à
   - un séparateur (en aval) et l'autre à
   - un décanteur lamellaire (en amont), ce dernier étant lui-même relié à
   - un coalesceur (en amont), lui-même étant relié à
   - un tranquillisateur (en amont).
20.- Dispositif de filtration d'eau brute selon l'un des points 16 à 19 comprenant en outre, en amont du lit de filtration aérobie, une conduite d'alimentation en air, en oxygène ou en un mélange de gaz approprié contenant de l'oxygène.
21.- Dispositif de filtration selon le point 20, dans lequel le séparateur comprend des rideaux poreux.
22.- Dispositif de filtration selon le point 21, dans lequel les rideaux poreux sont en polypropylène.
23.- Dispositif de filtration selon l'un des points 17 à 22, comprenant en outre des moyens d'agitation des lits de filtration aérobie et anaérobie.
24.- Dispositif de filtration selon l'un des points 17 à 23, dans lequel le filtre biologique comprend en outre, pour chacun des lits de filtration aérobie et anaérobie, une conduite pour ensemencement bactérien. En variante, on peut aussi prévoir une ouverture ou un dispositif permettant d'introduire des bactéries sous forme de gélules ou de poudre de levure, avantageusement sous forme dosée.

De préférence, le lit de filtration anaérobie est en amont du séparateur, le lit de filtration aérobie étant en aval du décanteur lamellaire.

Le dispositif de filtration selon les points 16 à 24 précités peut être utilisé dans divers procédés continus ou discontinus, en particulier, dans des procédés de filtration, de traitement ou de pré-traitement d'eau brute.

Ainsi, le dispositif de filtration selon les points 16 à 24 peut mettre en oeuvre un procédé dans lequel :
- on utilise un dispositif selon le point 19 ou selon l'un des points 20 à 24 rattaché au point 19;
- on introduit de l'eau brute dans le tranquillisateur ;
- on introduit un coagulant dans le coalesceur ; et
- on extrait du séparateur de l'eau brute filtrée.

Selon une variante avantageuse de ce procédé, on introduit en outre, au goutte-à-goutte, de l'eau brute et/ou une préparation aqueuse bactérienne dans les lits de filtration aérobie et anaérobie, au moyen des conduites pour ensemencement bactérien.

Les dispositifs auxiliaire ou de filtration précités selon l'invention précités peuvent faire partie, seuls ou en combinaison, d'une installation de pré-traitement d'eau brute.

Ainsi, suivant un troisième aspect, l'invention a trait à une installation de pré-traitement d'eau brute comprenant :
- le dispositif de filtration précité,
- un premier dispositif auxiliaire tel que défini aux points 1 à 6 ci-dessus, dont la sortie est reliée au coalesceur du dispositif de filtration ; et
- un second dispositif auxiliaire tel que défini aux points 7 ou 8 rattaché au 7 ci-dessus, dont l'entrée est reliée à la sortie du dispositif de filtration.

Une telle installation peut mettre en oeuvre un procédé de pré-traitement d'eau brute dans lequel :
- on introduit de l'eau brute dans le tranquillisateur du dispositif de filtration ;
- on produit du coagulant au moyen du premier dispositif auxiliaire et on l'introduit dans le coalesceur du dispositif de filtration ;
- on laisse la filtration s'effectuer dans le dispositif de filtration ;
- on introduit une solution aqueuse contenant de l'hypochlorite de sodium dans l'eau filtrée, pour poursuivre la désinfection de l'eau ; puis
- on laisse le traitement de l'eau filtrée s'effectuer dans le second dispositif auxiliaire ;
- on récupère de l'eau pré-traitée à la sortie du second dispositif auxiliaire.

De tels procédé et installation de pré-traitement d'eau brute ont l'avantage majeur de permettre de traiter des eaux provenant de sources très variées.

Selon une autre variante avantageuse, l'installation précitée de traitement d'eau brute comprend en outre un dispositif complémentaire de production d'une solution aqueuse d'hypochlorite de sodium.

Selon encore une autre variante avantageuse, le procédé de production d'un coagulant pour eau brute, de traitement d'une eau contenant de l'hypochlorite de sodium ou de pré-traitement d'une eau brute comprend en outre une étape de production d'une solution aqueuse d'hypochlorite de sodium.

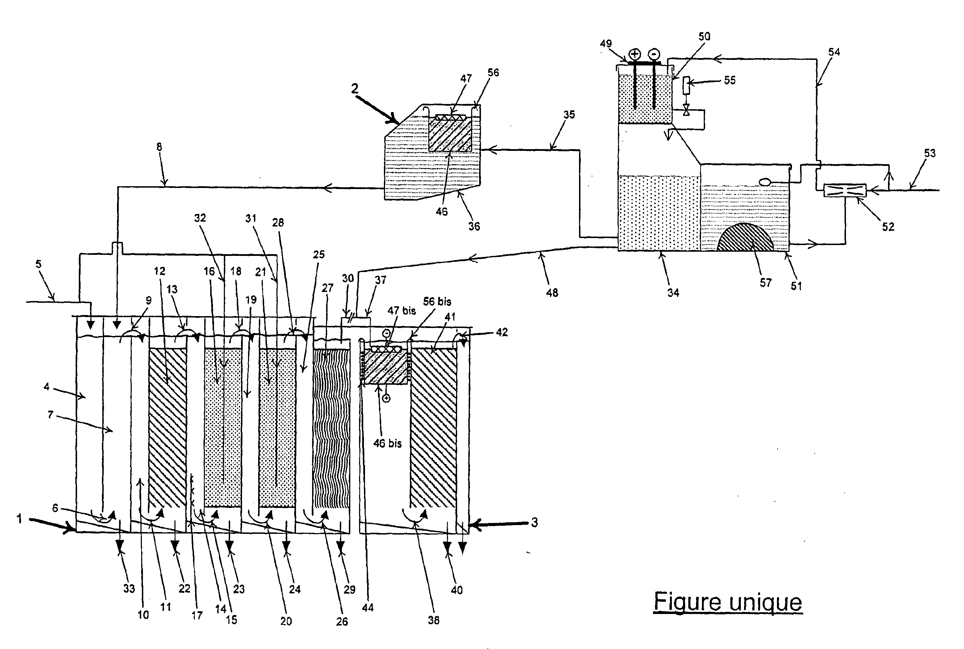

D'autres caractéristiques et avantages de l'invention vont maintenant être décrits en détail dans l'exposé qui suit et qui est donné en référence à la figure annexée qui représente schématiquement un mode de réalisation préféré d'une installation de pré-traitement d'eau brute suivant le troisième aspect de l'invention. L'invention est définie par les revendications.

### Exposé détaillé de l'invention

Comme on peut le voir sur la figure, l'installation de pré-traitement d'eau brute est essentiellement composée de trois éléments principaux qui sont :
- un dispositif de filtration 1 dans lequel arrive l'eau brute,
- un premier dispositif auxiliaire 2 servant à produire un coagulant pour le dispositif de filtration 1; et
- un second dispositif auxiliaire 3 servant à traiter l'eau provenant du dispositif de filtration, après que celle-ci a été additionnée d'une solution aqueuse d'hypochlorite de sodium.

### a) Dispositif de filtration

Le dispositif de filtration décrit sur la figure comprend un compartiment 4 faisant office de tranquillisateur pour l'eau brute. Ainsi, le flux de l'eau brute arrivant au sommet du compartiment 4 par la conduite 5 est freiné, ses tourbillons sont atténués et les plus grosses particules peuvent tomber au fond du compartiment 4.

Une ouverture 6 prévue au bas d'une paroi du compartiment 4 permet à l'eau d'entrer dans un compartiment adjacent 7 jouant le rôle de coalesceur. Un coagulant amené par la conduite de sortie 8 du premier dispositif auxiliaire 2 (décrit en détail ci-dessous) est déversé dans la partie supérieure du compartiment 7 à l'intérieur duquel les particules plus fines coalescent ou coagulent et floculent puis sont extraites par le fond du compartiment 7 au moyen d'une conduite d'évacuation 33. Un plan incliné traversant les compartiments 4 et 7 permet également aux particules coagulées tombées au fond du compartiment 4 d'être évacués par la conduite 33.

Une ouverture 9 prévue près du sommet du compartiment 7, au-dessus de l'endroit ou débouche la conduite 8, permet à l'eau de pénétrer dans un compartiment intermédiaire adjacent 10 dans la partie inférieure d'une paroi duquel est prévue une ouverture 11 constituant l'entrée d'un décanteur lamellaire 12.

Des particules, essentiellement des composés du type phosphates, précipitent au fond du compartiment 10, les boues coagulées au fond du décanteur lamellaire 12, et, grâce à un plan incliné traversant le bas du compartiment 10 et du décanteur lamellaire, ces particules et boues coagulées sont évacuées par une conduite 22.

La sortie du décanteur 12 est constituée d'une ouverture 13 située au-dessus des lamelles de ce décanteur 12, au sommet d'une de ses parois. Le liquide clair surnageant s'introduit par l'ouverture 13 dans un compartiment intermédiaire adjacent 14 qui est alimenté en air par une conduite 17, afin que l'eau se sature en air et que les éléments oxydables en solution ou en suspension s'oxydent. Ainsi, par exemple, les ions ferreux résiduels présents à l'état de traces s'oxydent en ions ferriques.

Le compartiment intermédiaire 14 comporte une paroi dont la partie inférieure est pourvue d'une ouverture 15 constituant l'entrée d'un filtre biologique.

Ce filtre biologique est composé d'un premier compartiment 16 de filtration aérobie comprenant un lit de fibres hydrophobes et oléophiles en polypropylène. Ce lit de fibres est fortement aéré par l'air libre ou en solution véhiculé par l'eau arrivant du compartiment 14 et enrichie par l'air comprimé injecté au moyen de la conduite d'alimentation en air 17 .

Une nitrification a ainsi lieu. Les particules tombant au fond du compartiment intermédiaire 14 ou du premier compartiment 16 sont, grâce à un plan incliné traversant le compartiment intermédiaire 14 et le compartiment 16 sont éliminées par une conduite 23.

L'eau remontant à l'intérieur du premier compartiment 16 du filtre biologique parvient à une ouverture 18 prévue au sommet d'une paroi de ce compartiment 16 en vue du passage dans un compartiment intermédiaire adjacent 19 ayant une paroi dont la partie inférieure est pourvue d'une ouverture 20 constituant l'entrée du second compartiment du filtre biologique 21. L'eau remonte dans ce second compartiment 21 dans lequel se trouvent un second lit de fibres hydrophobes et oléophiles également en polypropylène. Cependant, à la différence du premier lit de fibres, ce second lit n'est pas aéré. Il est dépourvu de conduite d'alimentation en air telle que la conduite 17 et il s'y produit donc une filtration anaérobie, qui, par dénitrification, dégrade les matières azotées et organiques contenues dans l'eau.

Les particules tombant au fond du compartiment intermédiaire adjacent 19 ou du second compartiment 21 de filtration anaérobie sont, grâce à un plan incliné traversant ces compartiments, éliminées par une conduite 24.

Des moyens d'agitation (non représentés) sont de préférence prévus pour agiter les lits de filtration et détacher la biomasse formée.

Avantageusement, chacun des compartiments de filtration biologique 16,21 est muni d'un tuyau d'alimentation 31,32. Ces tuyaux 31,32 sont reliés à la conduite d'arrivée d'eau brute 5 et ils permettent ainsi une introduction au goutte-à-goutte d'eau brute initiale. Cette faible quantité d'eau brute introduite amène des bactéries qui se fixent sur les fibres des lits de filtration.

En fonction des conditions prévalant dans le milieu, les bactéries qui colonisent chacun des deux compartiments du filtre biologique, se spécialisent. Selon les cas elles permettent la nitrification ou la dénitrification et elles décomposent les huiles et les graisses arrêtées par les fibres et nettoient ainsi ces dernières. De même, l'ammoniaque est oxydée en azote en absence d'oxygène.

Une sortie 28 prévue au sommet d'une paroi du compartiment 21 permet à l'eau chargée en biomasse d'arriver dans un compartiment intermédiaire adjacent 25 dont la partie inférieure est munie d'un ouverture 26 constituant l'entrée du séparateur 27. Ce séparateur 27 est formé de rideaux poreux en polypropylène. L'eau traverse ce séparateur 27 de bas en haut, puis, une fois arrivée en haut, est évacuée par une conduite 30 vers le second dispositif auxiliaire 3.

Les particules tombant au fond du compartiment intermédiaire 25 ou du séparateur 27, grâce à un plan incliné traversant ces derniers, sont éliminées par une conduite 29.

### b) Dispositif auxiliaire 2

Comme indiqué ci-dessus, ce dispositif a pour fonction de produire le coagulant qui sera ensuite introduit, au moyen de la conduite de sortie 8, dans le coalesceur 7 qui communique, d'un côté, avec la sortie du tranquillisateur 4 et, de l'autre côté, avec le décanteur lamellaire 12.

En temps normal, ce dispositif 2 comprend une cuve contenant :
- une solution aqueuse d'hypochlorite de sodium,
- une anode comprenant un récipient métallique, tel qu'un panier 46, contenant des billes de fer immergées dans la solution aqueuse d'hypochlorite de sodium ; et
- une cathode ayant au moins une partie immergée, généralement en forme de grille 47, dans la solution aqueuse d'hypochlorite de sodium, cette partie immergée se trouvant au-dessus des billes de fer.

L'hypochlorite de sodium provient généralement d'un réservoir de solution aqueuse d'hypochlorite de sodium 34, au moyen d'une conduite d'entrée 35 du dispositif auxiliaire 2.

Une variante avantageuse consiste à alimenter directement le réservoir 34 par de l'hypochlorite de sodium produit sur place au moyen d'un dispositif complémentaire constitué d'un électrolyseur 49 plongeant dans une cuve d'électrolyse 50 remplie d'une solution à 25 g/l de chlorure de sodium. Cette solution saline est obtenue en mélangeant une saumure saturée par du sel 57, contenue dans une cuve 51, avec de l'eau potable adoucie arrivant par une conduite 53, à travers un hydro-injecteur 52. Par l'intermédiaire de cet hydro-injecteur 52, la saumure concentrée est aspirée et mélangée à l'eau potable adoucie pour obtenir une solution saline à 25 g/l de sel qui est déversée dans la cuve d'électrolyse 50 par la conduite 54. L'électrolyseur 49 est alimenté en courant continu jusqu'à l'obtention d'une solution d'hypochlorite de sodium à 6,5 g/l d'équivalent chlore. Lorsque le niveau de solution d'hypochlorite dans le réservoir 34 est suffisamment bas, suite à sa consommation, la vanne 55 s'ouvre pour vider la cuve d'électrolyse 50 et remplir le réservoir 34.

Pour lui éviter d'être attaqué chimiquement par le contenu de la cuve d'électrolyse 50, le récipient métallique ou panier contenant les billes de fer est généralement en titane ou en alliage de titane/argent ayant 2 à 5% d'argent, en alliage titane/palladium ou en alliage de titane/oxydes de métaux précieux. Il peut également être en zirconium ou en alliage de zirconium.

Le panier est généralement suspendu par des anses venant s'accrocher sur deux parois de la cuve du dispositif auxiliaire. Il a généralement une section transversale circulaire ou rectangulaire. Il peut être formé à partir d'une grille métallique ou d'une feuille métallique comportant des perforations suffisamment petites pour que les billes ne les traversent pas. Ces perforations permettent la circulation de la solution aqueuse contenant des ions et de fines particules d'oxy-hydroxyde de fer.

A la place des billes de fer, on peut aussi utiliser de la grenaille ou des copeaux de fer.

Afin d'éviter les courts-circuits, la face de la grille tournée vers les billes est munie d'un élément de séparation, généralement un textile poreux alimentaire, qui peut être par exemple, un géotextile en toile de verre de faible épaisseur ou un textile en polyéthylène ou en polypropylène, tissé ou non tissé. Ce textile est de préférence résistant au déchirement.

De plus, il est préférable de maintenir l'anode et la cathode séparées par des entretoises isolantes ayant par exemple une épaisseur de 2 mm.

De préférence, le fond 36 de la cuve est incliné vers la conduite de sortie 8.

Le dispositif 2 est de préférence muni de moyens d'agitation du récipient métallique (non représentés) qui peuvent être un vérin ou vibreur pneumatique ou électrique, ou un vibreur magnétique ou à ultra-sons.

### Fonctionnement du dispositif auxiliaire 2

Bien que le dispositif auxiliaire 2 puisse fonctionner de manière discontinue, par lots (« batch » en anglais), il est de préférence utilisé de manière continue.

Une solution aqueuse d'hypochlorite de sodium (NaClO) est introduite dans la cuve au moyen de la conduite 35.

L'anode et la cathode sont alimentées en courant continu. L'intensité de ce courant peut être variable. Il peut aussi être sous forme d'impulsions. Sa tension est basse, généralement inférieure à 10 V, par exemple de 0,5 V à 1 V.

A l'intérieur du panier 56, il se produit alors, grâce à la présence de l'hypochlorite de sodium, à température ambiante et à un pH voisin de la neutralité, une dissolution électrochimique du fer, puis diverses réactions d'électrolyse, au cours desquelles l'ion ferreux (Fe²⁺) est oxydé en ion ferrique (Fe³⁺). Il se forme alors essentiellement du chlorure ferrique (FeCl₃, 6H₂O) insoluble, ainsi qu'apparemment, en plus faible quantité, un autre composé micro-cristallin insoluble formé vraisemblablement de microcristaux d'oxy-hydroxyde de fer. On obtient ainsi dans la cuve une suspension de chlorure ferrique et d'oxy-hydroxyde de fer.

Les moyens d'agitation sont prévus pour agiter l'anode. Il n'est pas nécessaire qu'ils agitent la cathode. En secouant l'anode, ils évitent la formation sur les billes d'un revêtement qui stopperait ou ralentirait l'électrolyse.

Le mélange réactionnel est évacué par la conduite de sortie 8 pour servir de coagulant dans le coalesceur 7. Ce coagulant est destiné à provoquer la densification des matières en suspension dans l'eau à traiter, telles que les boues, et la précipitation des phosphates.

La quantité de coagulant injectée dans le coalesceur 7 est déterminée en fonction de l'eau brute à traiter. A titre d'exemple, pour une eau brute contenant de 5 à 50 mg/l de matière en suspension (MES), le débit de coagulant injecté est tel que le débit de FeCl₃, 6H₂O soit de 5 à 30 mg/l, pour une eau à 50 à 150 mg/l de MES, le débit est de 30 à 50 mg/l de FeCl₃,6H₂O et pour une eau à 150 à 1500 mg/l de MES, le débit est de 50 à 100 mg/l de FeCl₃,6H₂O.

### c) Dispositif auxiliaire 3

Le dispositif auxiliaire 3 comprend certains des éléments qui sont communs au dispositif auxiliaire 2.

Dans ce dispositif, la concentration de la solution aqueuse en hypochlorite de sodium est moins importante que dans le dispositif auxiliaire 2. Il s'ensuit que la conductibilité du liquide est plus faible. Par conséquent, la distance entre la cathode et le lit de billes doit être plus faible. Elle correspond en général à l'épaisseur de l'élément se séparation poreux, soit environ 0,7 mm.

Ce dispositif est en outre muni d'un électro-aimant constitué d'une bobine de solénoïde 44 entourant le panier 46bis à anses 56bis contenant les billes. La bobine est parcourue par un courant alternatif et développe un champ magnétique dont l'induction est supérieure à 0,01 Tesla.

De préférence, l'intérieur du panier est préférablement au moins partiellement revêtu d'une couche de catalyseur, généralement du palladium.

De même, la cathode 47bis est elle aussi de préférence au moins partiellement revêtue d'une couche de catalyseur, généralement du palladium, en particulier du côté faisant face aux billes.

Les dimensions du dispositif auxiliaire 3 sont en général différentes de celles du dispositif auxiliaire 2, car sa fonction est totalement différente.

En effet, le dispositif auxiliaire 3 remplit notamment les fonctions suivantes :
- il réduit l'hypochlorite en excès restant dans l'eau,
- il extrait les métaux lourds et les éléments toxiques comme l'arsenic,
- il change la nature cristallographique du carbonate de calcium contenu dans l'eau et
- il détruit les composés organo-halogénés, en particulier chlor-aminés, contenus dans l'eau.

Ainsi, il donne ou redonne à l'eau les qualités d'une eau de source.

Ce dispositif a l'avantage de permettre de traiter des eaux contenant des métaux lourds et/ou des éléments toxiques comme l'arsenic et/ou des composés organiques, des eaux à dureté calcique supérieure à 15°F (c'est-à-dire dont la concentration en carbonate de calcium est supérieure à 150 mg/l et des eaux stagnantes provenant par exemple d'étangs mal aérés ou de réservoirs où les eaux ont séjourné trop longtemps.

### Fonctionnement du dispositif auxiliaire 3

En se reportant à nouveau à la figure annexée, on voit que l'eau sortant par la conduite de sortie 30 du séparateur 27 du dispositif de filtration 1 est additionnée de solution d'hypochlorite de sodium provenant du réservoir 34 par la conduite 48, avant d'être introduite dans le second dispositif auxiliaire 3 par la conduite d'entrée 37 de ce dernier.

Une variante avantageuse consiste, ici aussi, à utiliser le dispositif complémentaire déjà mentionné comme source d'hypochlorite de sodium pour le réservoir 34. La première fonction de l'hypochlorite de sodium est de désinfecter l'eau arrivant par la conduite de sortie 30. Le pH de la solution d'hypochlorite de sodium produite par le dispositif complémentaire est proche de 7. Cette solution a l'avantage de contenir de l'acide hypochloreux, désinfectant plus actif que l'hypochlorite de sodium vis-à-vis des germes.

A l'intérieur de la cuve du dispositif auxiliaire 3, on fait circuler un courant continu à travers l'anode 46bis et la cathode 47bis. Ainsi, le fer des billes s'oxyde en cation ferreux, puis en cation ferrique à l'anode.

L'ensemble correspond à la réaction globale suivante :

2 Fe²⁺ + Clo⁻ + H₂O → Cl⁻ + 2OH⁻ + 2 Fe³⁺

La présence simultanée de fer et d'ions ferreux permet au couple réducteur Fe/Fe²⁺ d'agir sur certains ions de métaux lourds. Qui plus est le chlorure ferrique oxyde certains autres ions et l'hydroxyde ferrique présent absorbe les espèces peu solubles formées aussi bien en réduction qu'en oxydation. Puis celles-ci précipitent et peuvent être éliminées par la conduite 40 prévue au fond du dispositif. Ainsi, des métaux lourds tels que l'arsenic, le cadmium, le plomb, le chrome ou le mercure, voient leurs concentrations se réduire considérablement.

Des moyens d'agitation des billes (non représentés) sont prévus. Ils produisent un frottement des billes les unes contre les autres qui retire ainsi de leurs surfaces la couche d'oxyde et les dépôts qui s'y sont formés. Cet oxyde et ces dépôts sont ensuite également éliminés par la conduite 40.

Comme moyens d'agitation, on utilise de préférence un électro-aimant alimenté en courant alternatif de façon à engendrer un champ magnétique variable. L'électro-aimant a l'avantage de ne pas comporter de pièces en mouvement qui pourraient s'user et d'éviter l'utilisation de joints d'étanchéité, de contacts électriques mobiles. De plus, l'effet d'agitation pénètre à l'intérieur de la masse de billes car il n'est pas limité à une couche superficielle.

La différence de potentiel entre l'anode et la cathode est préférablement de 0,5 à 0,8 V.

De préférence, le courant continu est intermittent, c'est-à-dire haché avec une fréquence allant de 0,5 à 5 Hz. Ceci a deux effets : pendant les périodes d'absence de courant, d'une part, les électrodes se dépolarisent et, par conséquent, les ions diffusent plus librement et, d'autre part, l'hypochlorite qui traverse la cathode n'est pas réduite par la cathode 47bis et peut donc se réduire en oxydant les ions ferreux en ions ferriques.

L'intensité du courant est fonction du débit d'eau traversant le dispositif auxiliaire 3. Par exemple, avec un débit de 4,550 m³/h, l'intensité du courant est d'environ 14 A.

L'eau présente au fond du dispositif est introduite, par une ouverture 38 prévue au bas d'une paroi du dispositif, dans la partie inférieure d'un décanteur lamellaire adjacent 41. Les particules tombant au fond de ce décanteur sont éliminées par une conduite d'évacuation 40 et l'eau surnageant est amenée par une sortie 42 dans d'autres dispositifs pour y subir divers traitements ultérieurs connus, notamment pour augmenter davantage sa pureté.

Le revêtement en palladium du panier a pour effet de décomposer les composés organiques tels que les organo-halogénés, en particulier les organo-chlorés comme les chlor-amines, et une partie des nitrates résiduels. De surcroît, le palladium amplifie le phénomène de réduction des ions hypochlorites (HClO⁻) par les ions ferreux.

L'électro-aimant crée en outre un champ magnétique qui modifie la structure du carbonate de calcium, les ions calcium s'orientent différemment, ce qui favorisera ultérieurement la formation de cristaux d'aragonite peu adhérente plutôt que de calcite incrustante et limitera le bouchage des pores des membranes de filtration lorsque l'eau subira ultérieurement une filtration par membrane.

De plus, le champ magnétique réorganise les atomes dans la molécule d'eau et lui redonne ainsi ses propriétés d'origine.

L'électro-aimant est alimenté par un courant alternatif, par exemple de 50 Hz.

### Fonctionnement global de l'installation selon l'invention

Les données suivantes sont fournies à titre d'exemple pour le traitement d'environ 5000 l/h d'eau brute ayant une teneur en MES allant de 5 à 1500 mg/l.

La concentration de la solution aqueuse d'hypochlorite de sodium introduite dans le premier dispositif auxiliaire 2 est généralement de l'ordre de 6,5 g/l et son débit est généralement de 3 à 15 l/h.

Le débit du coagulant est généralement compris entre 1 et 15 l/h.

La surface du panier du premier dispositif auxiliaire, qui peut avoir une section transversale circulaire ou rectangulaire, est généralement de 5 à 50 dm². Sa hauteur est généralement de 30 à 100 mm.

L'intensité du courant continu d'électrolyse du premier dispositif auxiliaire 2 est généralement de 40 à 120 ampères.

L'eau pré-traitée obtenue sortant par la conduite 42 du second dispositif auxiliaire 3 a déjà une pureté dite « technique », c'est-à-dire qu'elle doit faire l'objet de traitements supplémentaires pour pouvoir être potable.

Dans certains cas, en fonction de la composition de l'eau brute de départ, l'eau prétraitée sortant par la sortie 42 du second dispositif auxiliaire 3 peut être potable ou n'avoir besoin que d'un traitement supplémentaire limité pour être potable.

Ces traitements ultérieurs peuvent être, par exemple, une filtration sur filtre à sable et/ou sur cartouche de micro-filtration.

Une filtration sur charbon actif peut aussi être prévue pour supprimer les odeurs, les mauvais goûts et les couleurs de l'eau ainsi que les traces d'hypochlorite résiduel. Les pesticides et des composés organiques (phénols, hydrocarbures aromatiques...) éventuellement encore présents dans l'eau sont ainsi éliminés en grande partie.

Si l'eau purifiée a un pH trop faible (inférieur à 6,5), étant donné que ni le dispositif de filtration 1, ni les dispositifs auxiliaires 2 et 3 n'ont un effet important sur le pH, il peut être prévu, en amont du coalesceur 7, par exemple dans le compartiment 4, un ajout de lait de chaux (solution aqueuse d'hydroxyde de calcium).

Si en revanche le pH de l'eau purifiée est trop fort (supérieur à 8,5), il est possible d'insérer en amont du coalesceur 7 une unité de neutralisation par de l'acide sulfurique.

On peut également prévoir une ultra-filtration pour arrêter toutes les particules dont la taille est supérieure à 0,01 µm (bactéries et virus résistant à l'hypochlorite de sodium compris), ce qui permet d'obtenir une eau bactériologiquement pure, d'extraire les grosses molécules organiques, de réduire de façon draconienne la quantité de MES résiduelle et d'obtenir une eau claire, c'est-à-dire à turbidité réduite.

Une nano-filtration ou une osmose inverse peuvent également être envisagées, en particulier lorsque des espèces en solution ne peuvent pas être arrêtées par l'ultra-filtration.

Bien entendu, l'installation selon l'invention est munie de moyens supplémentaires bien connus de l'homme du métier, tels que des détecteurs de chlore, des sondes de pH reliées à des pH-mètres, des thermomètres ou thermocouples, des débit-mètres, des appareils de mesure de la conductivité, des pompes, des compteurs d'eau ou d'air, des moyens de réglage ou de pilotage de ces pompes, des moyens électroniques et/ou informatiques pour contrôler et/ou commander le fonctionnement des appareils, calculer divers paramètres ou enregistrer les résultats, etc.

## Revendications

1. Procédé de pré-traitement d'eau brute, dans lequel :
- on utilise une installation comprenant :
1) un dispositif de filtration (1) comportant, d'amont en aval :
• un tranquillisateur (4),
• un coalesceur (7),
• un décanteur lamellaire (12),
• un filtre biologique ayant une entrée (15) et une sortie (28), ce filtre biologique comprenant un lit de filtration aérobie (16) relié à un lit de filtration anaérobie (21),
• un séparateur (27) ;
• un dispositif auxiliaire (2) comprenant une cuve contenant :
- une anode comprenant un récipient métallique (46) contenant des particules de fer
- une cathode (47)
- au moins une portion de la partie immergée de la cathode (47) se trouve au-dessus de certaines au moins des particules de fer,
- la sortie (8) de ce dispositif auxiliaire (2) étant reliée au coalesceur (7) du dispositif de filtration (1) ;
- on introduit une solution aqueuse contenant de l'hypochlorite de sodium dans ledit récipient métallique (46) du dispositif auxiliaire (2) de façon à ce que certaines au moins des particules de fer soient immergées dans la solution aqueuse contenant de l'hypochlorite de sodium et que la cathode (47) ait au moins une partie immergée dans la solution aqueuse contenant de l'hypochlorite de sodium ;
- on produit du coagulant au moyen du dispositif auxiliaire (2) et on l'introduit dans le coalesceur (7) du dispositif de filtration (1) ; et
- on laisse la filtration s'effectuer dans le dispositif de filtration (1).

2. Procédé de pré-traitement d'eau brute selon la revendication 1, dans lequel :
- on utilise en outre un second dispositif auxiliaire (3) comprenant une cuve contenant :
- une anode comprenant un récipient métallique (46bis) contenant des particules de fer et
- une cathode (47 bis),
- au moins une portion de la partie immergée de la cathode (47bis) se trouve au-dessus de certaines au moins des particules de fer,
- un électro-aimant ou une boucle magnétique (44) entourant le récipient métallique contenant les particules de fer,
- l'entrée (37) de ce second dispositif auxiliaire (3) étant reliée à la sortie (30) du dispositif de filtration d'eau brute (1) ;
- ce second dispositif auxiliaire (3) étant rélié de façon à ce que certaines au moins des particules de fer soient immergées dans la solution aqueuse contenant de l'hypochlorite de sodium et que la cathode (47) ait au moins une partie immergée dans la solution aqueuse contenant de l'hypochlorite de sodium;
- on alimente en courant continu l'anode (46bis) et la cathode (47bis) du second dispositif auxiliaire (3);
- on laisse l'électrolyse du fer s'effectuer ;
- on laisse le traitement de l'eau filtrée s'effectuer dans le second dispositif auxiliaire (3) ; et
- on récupère de l'eau brute pré-traitée à la sortie (42) du second dispositif auxiliaire (3).

3. Procédé de pré-traitement d'eau brute selon la revendication 1 ou 2, comprenant en outre une étape de production d'une solution aqueuse d'hypochlorite de sodium qui est fourni au dispositif auxiliaire (2).

4. Procédé de pré-traitement d'eau brute selon la revendication 2 ou 3, comprenant en outre une étape de production, dans un dispositif complémentaire, d'une solution aqueuse d'hypochlorite de sodium qui est fourni au second dispositif auxiliaire (3).

5. Procédé de pré-traitement d'eau brute selon l'une des revendications 1 à 4 mis en oeuvre de facon continue.

6. Procédé de pré-traitement d'eau brute selon l'une des revendications 1 à 5, dans lequel le second dispositif auxiliaire (3) est alimenté en courant intermittent, de préférence haché régulièrement, plus préférentiellement avec une fréquence de 0,1 à 1 Hz.

7. Procédé de pré-traitement d'eau brute selon la revendication 2 ou selon l'une des revendications 3 à 6 rattachée à la revendications 2, dans lequel on relie l'électro-aimant (44) à une source de courant alternatif.

8. Procédé de pré-traitement d'eau brute selon l'une des revendication 1 à 7, dans lequel le filtre biologique comprend en outre, pour chacun des lits de filtration aérobie (16) et anaérobie (21), une conduite pour ensemencement bactérien (31,32) et dans lequel on introduit, au goutte-à-goutte, de l'eau brute et/ou une préparation aqueuse bactérienne dans les lits de filtration aérobie (16) et anaérobie (21), au moyen des conduites pour ensemencement bactérien (31, 32).

9. Installation de pré-traitement d'eau brute, comprenant :
1) un dispositif de filtration (1) comportant, d'amont en aval :
• un tranquillisateur (4),
• un coalesceur (7),
• un décanteur lamellaire (12),
• un filtre biologique ayant une entrée (15) et une sortie (28), ce filtre biologique comprenant un lit de filtration aérobie (16) relié à un lit de filtration anaérobie (21),
• un séparateur (27) ;
2) un dispositif auxiliaire (2) comprenant une cuve contenant :
- une solution aqueuse contenant de l'hypochlorite de sodium et
- une anode comprenant un récipient métallique (46) contenant des particules de fer dont certaines au moins sont immergées dans la solution aqueuse contenant de l'hypochlorite de sodium et
- une cathode (47) ayant au moins une partie immergée dans la solution aqueuse contenant de l'hypochlorite de sodium,
- au moins une portion de la partie immergée de la cathode (47) se trouve au-dessus de certaines au moins des particules de fer immergées,
- la sortie (8) de ce dispositif auxiliaire (2) étant reliée au coalesceur (7) du dispositif de filtration (1).

10. Installation de pré-traitement d'eau brute selon la revendication 9, comprenant en outre :
- un second dispositif auxiliaire (3) comprenant une cuve contenant :
- une anode comprenant un récipient métallique (46bis) contenant des particules de fer dont certaines au moins sont immergées dans la solution aqueuse contenant de l'hypochlorite de sodium et
- une cathode (47bis) ayant au moins une partie immergée dans la solution aqueuse contenant de l'hypochlorite de sodium,
- au moins une portion de la partie immergée de la cathode (47bis) se trouve au-dessus de certaines au moins des particules de fer immergées,
- un électro-aimant ou une boucle magnétique (44) entourant le récipient métallique contenant les particules de fer,
- l'entrée (37) de ce second dispositif auxiliaire (3) étant reliée à la sortie (30) du dispositif de filtration d'eau brute (1).

11. Installation de pré-traitement d'eau brute selon la revendication 9 ou 10, comprenant en outre un dispositif complémentaire de production d'une solution aqueuse d'hypochlorite de sodium alimentant un réservoir (34) relié à une conduite d'entrée (35) du dispositif auxiliaire (2).

12. Installation de pré-traitement d'eau brute selon la revendication 10 ou 11, comprenant en outre un dispositif complémentaire de production d'une solution aqueuse d'hypochlorite de sodium alimentant un réservoir (34) relié à une conduite (48) repliée à la conduite d'entrée (37) du second dispositif auxiliaire (3).

13. Installation de pré-traitement d'eau brute selon l'une des revendications 9 à 12, dans laquelle la cathode (47, 47bis) a une forme sensiblement plane.

14. Installation de pré-traitement d'eau brute selon l'une des revendications 9 à 12, dans laquelle la cathode (47, 47bis) se présente sous la forme d'une grille.

15. Installation de pré-traitement d'eau brute selon l'une des revendications 9 à 14, dans laquelle le ou les récipient(s) métallique(s) (46, 46bis) est/sont au moins partiellement en titane, en zirconium, en alliage de titane ou en alliage de zirconium.

16. Installation de pré-traitezaent d'eau brute selon l'une des revendications 9 à 15, dans laquelle la ou les cathode(s) (47, 47bis) comprend/comprennent, sur sa/leur ou ses/leurs face(s) tournée(s) vers les particules de fer, un élément de séparation, de préférence un matériau poreux isolant, en particulier un textile poreux, par exemple, en polyéthylène ou en polypropylène.

17. Installation de pré-traitement, d'eau brute selon l'une des revendications 9 à 16, comprenant en outre des moyens d'agitation des récipients métalliques (46,46 bis).

18. Installation de pré-traitement d'eau brute selon l'une des revendications 9 à 17, comprenant en outre un électro-aimant ou une boucle magnétique (44) entourant le récipient métallique (46bis) du second dispositif auxiliaire (3) contenant les particules de fer.

19. Installation de pré-traitement d'eau brute selon l'une des revendications 9 à 18, dans laquelle l'intérieur du récipient métallique (46bis) du second dispositif auxiliaire (3) est au moins partiellement revêtu d'une couche de catalyseur, de préférence du palladium.

20. Installation de pré-traitement d'eau brute selon l'une des revendications 9 à 19, dans laquelle les lits de filtration aérobie (16) et anaérobie (21) comprennent des fibres hydrophobes et oléophiles.

21. Installation de pré-traitement d'eau brute selon la revendication 20, dans laquelle les fibres hydrophobes et oléophiles comprennent des fibres de polypropylène.

22. Installation de pré-traitement d'eau brute selon l'une des revendications 9 à 21, comprenant en outre, en amont du lit de filtration aérobie (16), une conduite d'alimentation (17) en air, en oxygène ou en un mélange de gaz rapproprié contenant de l'oxygène.

23. Installation de pré-traitement d'eau brute selon l'une des revendications 9 à 22, dans laquelle le séparateur (27) comprend des rideaux poreux.

24. Installation de pré-traitement d'eau brute selon l'une des revendications 9 à 23, dans laquelle les rideaux poreux sont en polypropylène.

25. Installation de pré-traitement d'eau brute selon l'une des revendications 9 à 24, comprenant en outre des moyens d'agitation des lits de filtration aérobie (16) et anaérobie (21).

26. Installation de pré-traitement d'eau brute selon l'une des revendications 9 à 24, dans laquelle le filtre biologique comprend en outre, pour chacun des lits de filtration aérobie (16) et anaérobie (21), une conduite pour ensemencement bactérien (31,32).

## Patentansprüche

1. Verfahren zum Vorbehandeln von Rohwasser, bei dem
- eine Anordnung verwendet wird, die umfasst
1) eine Filtervorrichtung (1), die von stromauf nach stromab aufweist
• eine Beruhigungseinheit (4),
• einen Koaleszenzbildner (7),
• einen Lamellenabscheider (12),
• ein biologisches Filter mit einem Einlass (15) und mit einem Auslass (28), wobei das biologische Filter über eine aerob wirkende Filterlage (16) verfügt, die mit einer anaerob wirkenden Filterlage (21) verbunden ist,
• eine Trenneinheit (27),
• eine Hilfsvorrichtung (2), die über ein Gefäß verfügt, das beinhaltet
- eine Anode, die mit einem metallischen Behälter (46) ausgestattet ist, der Eisenpartikel aufnimmt,
- eine Kathode (47),
- wobei sich wenigstens ein Abschnitt des eingetauchten Teiles der Kathode (47) über wenigstens einigen Eisenpartikeln befindet,
- wobei der Auslass (8) der Hilfsvorrichtung (2) mit dem Koaleszenzbildnder (7) der Filtervorrichtung (1) verbunden ist,
- eine wässrige, Natriumhypochlorit aufweisende Lösung derart in den metallischen Behälter (46) der Hilfsvorrichtung (2) eingeführt wird, dass wenigstens bestimmte Eisenpartikel in der Natriumhypochlorit aufweisenden wässrigen Lösung eingetaucht sind und dass die Kathode (47) wenigstens einen in die Natriumhypochlorit aufweisende wässrige Lösung eingetauchten Teil aufweist,
- mittels der Hilfsvorrichtung (2) koagulierte Masse hergestellt und diese in den Koaleszenzbildner (7) der Filtervorrichtung (1) eingeführt wird und
- in der Filtervorrichtung (1) die Filtration zur Durchführung kommen gelassen wird.

2. Verfahren zum Vorbehandeln von Rohwasser nach Anspruch 1, bei dem
- weiterhin eine zweite Hilfsvorrichtung (3) verwendet wird, die über ein Gefäß verfügt, das beinhaltet
- eine Anode, die einen metallischen Behälter (46bis) aufweist, der Eisenpartikel aufnimmt, und
- eine Kathode (47bis),
- wobei sich wenigstens ein Abschnitt des eingetauchten Teils der Kathode (47bis) über wenigstens einigen Eisenpartikeln befindet,
- einen Elektromagneten oder eine Magnetschleife (44), der den die Eisenpartikel aufnehmenden metallischen Behälter umgibt,
- wobei der Einlass (37) der zweiten Hilfsvorrichtung (3) mit dem Auslass (30) der Filtervorrichtung (1) für Rohwasser verbunden ist,
- wobei die zweite Hilfsvorrichtung (3) derart verbunden ist, dass wenigstens einige Eisenpartikel in die Natriumhypochlorit aufweisenden wässrigen Lösung eingetaucht sind und dass die Kathode (47) wenigstens einen in die Natriumhypochlorit aufweisenden wässrigen Lösung eingetauchten Teil aufweist,
- die Anode (46bis) und die Kathode (47bis) der zweiten Hilfsvorrichtung (3) mit Gleichstrom beaufschlagt werden,
- die Eisenelektrolyse wirken gelassen wird,
- die Behandlung des gefilterten Wassers in der zweiten Hilfsvorrichtung (3) wirken gelassen wird und
- an dem Auslass (42) der zweiten Hilfsvorrichtung (3) das vorbehandelte Rohwasser aufgenommen wird.

3. Verfahren zum Vorbehandeln von Rohwasser nach Anspruch 1 oder 2, das weiterhin einen Schritt des Herstellens einer wässrigen Natriumhypochloritlösung aufweist, die der Hilfsvorrichtung (2) zugeführt wird.

4. Verfahren zum Vorbehandeln von Rohwasser nach Anspruch 2 oder 3, das weiterhin einen Schritt der Herstellens in einer Zusatzvorrichtung einer wässrigen Natriumhypochloritlösung aufweist, die der zweiten Hilfsvorrichtung (3) zugeführt wird.

5. Verfahren zum Vorbehandeln von Rohwasser nach einem der Ansprüche 1 bis 4, das kontinuierlich durchgeführt wird.

6. Verfahren zum Vorbehandeln von Rohwasser nach einem der Ansprüche 1 bis 5, bei dem die zweite Hilfsvorrichtung (3) von einem intermittierenden, vorzugsweise regelmäßig zerhackten, besonders bevorzugt mit einer Frequenz von 0,1 bis 1 Hz, Strom versorgt wird.

7. Verfahren zum Vorbehandeln von Rohwasser nach Anspruch 2 oder einem der Ansprüche 3 bis 6 soweit auf Anspruch 2 rückbezogen, bei dem der Elektromagnet (44) an eine Wechselstromquelle angeschlossen ist.

8. Verfahren zum Vorbehandeln von Rohwasser nach einem der Ansprüche 1 bis 7, bei dem das biologische Filter weiterhin für jede der aeroben (16) und anaeroben (21) Filterlagen eine Leitung (31, 32) zum Impfen mit Bakterien aufweist und die tropfenweise Rohwasser und/oder eine wässrige bakterielle Zubereitung mittels der Leitungen (31, 32) zum bakteriellen Impfen in die aeroben (16) und anaeroben (21) Filterlagen eingeführt wird.

9. Einrichtung zum Vorbehandeln von Rohwasser mit
1) eine Filtervorrichtung (1), die von stromauf nach stromab aufweist
• eine Beruhigungseinheit (4),
• einen Koaleszenzbildner (7),
• einen Lamellenabscheider (12),
• ein biologisches Filter mit einem Einlass (15) und mit einem Auslass (28), wobei das biologische Filter über eine aerob wirkende Filterlage (16) verfügt, die mit einer anaerob wirkenden Filterlage (21) verbunden ist,
• eine Trenneinheit (27),
2) eine Hilfsvorrichtung (2), die über ein Gefäß verfügt, das beinhaltet
- eine Natriumhypochlorit aufweisende wässrige Lösung und
- eine Anode, die über einen metallischen Behälter (46) verfügt, der Eisenpartikel aufnimmt, von denen wenigstens einige in die Natriumhypochlorit aufweisende wässrige Lösung eingetaucht sind, und
- eine Kathode (47) mit wenigstens einem in die Natriumhypochlorit aufweisende wässrige Lösung eingetauchten Teil,
- wobei sich wenigstens ein Abschnitt des eingetauchten Teiles der Kathode (47) über wenigstens bestimmten eingetauchten Eisenpartikeln befindet,
- wobei der Auslass (8) der Hilfsvorrichtung (2) mit dem Koaleszenzbildnder (7) der Filtervorrichtung (1) verbunden ist.

10. Einrichtung zum Vorbehandeln von Rohwasser nach Anspruch 9, die weiterhin über
- eine zweite Hilfsvorrichtung (3) verfügt, die ein Gefäß aufweist, das beinhaltet
- eine Anode, die über einen metallischen Behälter (46bis) verfügt, der Eisenpartikel aufnimmt, von denen wenigstens einige in die Natriumhypochlorit aufweisende wässrige Lösung eingetaucht sind, und
- eine Kathode (47bis) mit wenigstens einem in die Natriumhypochlorit aufweisende wässrige Lösung eingetauchten Teil,
- wobei sich wenigstens ein Abschnitt des eingetauchten Teils der Kathode (47bis) über wenigstens einigen eingetauchten Eisenpartikeln befindet,
- einen Elektromagneten oder eine Magnetschleife (44), der den die Eisenpartikel aufnehmenden metallischen Behälter umgibt,
- wobei der Einlass (37) der zweiten Hilfsvorrichtung (3) mit dem Auslass (30) der Filtervorrichtung (1) für Rohwasser verbunden ist.

11. Einrichtung zum Vorbehandeln von Rohwasser nach Anspruch 9 oder 10, die weiterhin eine Zusatzvorrichtung zum Herstellen einer wässrigen Natriumhypochloritlösung aufweist, die ein Reservoir (34) speist, das an eine Einlassleitung (35) der Hilfsvorrichtung (2) angeschlossen ist.

12. Einrichtung zum Vorbehandeln von Rohwasser nach Anspruch 10 oder 11, die weiterhin über eine Zusatzvorrichtung zum Herstellen einer wässrigen Natriumhypochloritlösung aufweist, die ein Reservoir (34) speist, das mit einer Leitung (48) verbunden ist, die an die Einlassleitung (37) der zweiten Hilfsvorrichtung (3) angeschlossen ist.

13. Einrichtung zum Vorbehandeln von Rohwasser nach einem der Ansprüche 9 bis 12, bei der die Kathode (47, 47bis) eine im Wesentlichen plane Gestalt aufweist.

14. Einrichtung zum Vorbehandeln von Rohwasser nach einem der Ansprüche 9 bis 12, bei der die Kathode (47, 47bis) eine gitterartige Gestalt aufweist.

15. Einrichtung zum Vorbehandeln von Rohwasser nach einem der Ansprüche 9 bis 14, bei der der oder jeder metallische Behälter (46, 46bis) wenigstens teilweise aus Titan, aus Zirkonium, einer Titanlegierung oder einer Zirkoniumlegierung ist.

16. Einrichtung zum Vorbehandeln von Rohwasser nach einem der Ansprüche 9 bis 15, bei der die oder jede Kathode (47, 47bis) auf ihrer den Eisenpartikeln zugewandten Seite ein Trennelement vorzugsweise aus einem isolierenden porösen Material wie insbesondere einem porösen Textil beispielsweise aus Polyethylen oder Polypropylen aufweist.

17. Einrichtung zum Vorbehandeln von Rohwasser nach einem der Ansprüche 9 bis 16, die weiterhin über Anregungsmittel für die metallischen Behälter (46, 46bis) verfügt.

18. Einrichtung zum Vorbehandeln von Rohwasser nach einem der Ansprüche 9 bis 17, die weiterhin über einen Elektromagneten oder über eine magnetische Schleife (44) verfügt, die den metallischen Behälter (46bis) der die Eisenpartikel aufnehmenden zweiten Hilfsvorrichtung (3) umgibt.

19. Einrichtung zum Vorbehandeln von Rohwasser nach einem der Ansprüche 9 bis 18, bei der das Innere des metallischen Behälters (46bis) der zweiten Hilfsvorrichtung (3) wenigstens teilweise mit einer Katalysatorschicht von vorzugsweise Palladium bedeckt ist.

20. Einrichtung zum Vorbehandeln von Rohwasser nach einem der Ansprüche 9 bis 19, bei der die aeroben (16) und anaeroben (21) Filterlagen hydrophobe und ölbindende Fasern aufweisen.

21. Einrichtung zum Vorbehandeln von Rohwasser nach Anspruch 20, bei der die hydrophoben und ölbindenden Fasern Polyprapylenfasern aufweisen.

22. Einrichtung zum Vorbehandeln von Rohwasser nach einem der Ansprüche 9 bis 21, die weiterhin stromauf der aeroben Filterlage (16) eine Zufuhrleitung (17) für Luft, für Sauerstoff oder für ein geeignetes, Sauerstoff beinhaltendes Gasgemisch aufweist.

23. Einrichtung zum Vorbehandeln von Rohwasser nach einem der Ansprüche 9 bis 22, bei der die Trenneinheit (27) poröse Lakenlagen aufweist.

24. Einrichtung zum Vorbehandeln von Rohwasser nach einem der Ansprüche 9 bis 23, bei der die porösen Lakenlagen aus Polypropylen sind.

25. Einrichtung zum Vorbehandeln von Rohwasser nach einem der Ansprüche 9 bis 24, die weiterhin über Anregungsmittel für die aeroben (16) und anaeroben (21) Filterlagen verfügt.

26. Einrichtung zum Vorbehandeln von Rohwasser nach einem der Ansprüche 9 bis 24, bei der das biologische Filter weiterhin für jede der aeroben (16) und anaeroben (21) Filterlagen eine Leitung (31, 32) zum bakteriellen Impfen aufweist.

## Claims

1. A process for pretreating raw water, wherein
- a plant is used, said plant comprising:
1) a filtration device (1) including, from upstream to downstream:
• a flow straightener (4),
• a coalescer (7),
• a lamellar settling tank (12),
• a biological filter having an inlet (15) and an outlet (28), said biological filter comprising an aerobic filtration compartment (16) connected to an anaerobic filtration compartment (21),
• a separator (27),
2) an auxiliary device (2) comprising a tank containing:
- an anode comprising a metallic receptacle (46) containing iron particles and
- a cathode (47),
- at least a portion of the immersed part of said cathode (47) being above at least some of said iron particles,
- the outlet (8) of said auxiliary device (2) being connected to said coalescer (7) of said filtration device (1);
- an aqueous solution containing sodium hypochlorite is introduced into said metallic receptacle (46) of said auxiliary device (2) so that at least some of said iron particles are immersed in said aqueous solution containing sodium hypochlorite and that cathode (47) has at least a part immersed in said aqueous solution containing sodium hypochlorite;
- coagulant is produced by means of said auxiliary device (2) and introduced into said coalescer (7) of said filtration device (1); and
- the filtration is allowed to take place in said filtration device (1).

2. The process for pretreating raw water according to claim 1, wherein:
- a second auxiliary device (3) is used, wherein said device (3) comprises a tank containing:
- an anode comprising a metallic receptacle (46bis) containing iron particles and
- cathode (47bis),
- at least a portion of said immersed part of said cathode (47bis) is above at least some of said iron particles,
- an electro-magnet or solenoid coil (44) surrounding the metallic receptacle containing said iron particles,
- the inlet (37) of said second auxiliary device (3) being connected to outlet (30) ofsaid raw water filtration device (1);
- said auxiliary second device (3) being connected in such a way that at least some ofsaid iron particles are immersed in said aqueous solution containing sodium hypochlorite and that said cathode (47) has at least a part immersed in said aqueous solution containing sodium hypochlorite;
- direct current is supplied to said anode (46bis) and said cathode (47bis) of said secondary auxiliary device (3);
- the electrolysis of the iron is allowed to take place;
- the treatment of the filtered water is allow to take place in said second auxiliary device (3); and
- pretreated raw water is recovered at outlet (42) of said second auxiliary device (3).

3. The process for pretreating raw water according to claim 1 or 2, further comprising a step of production of an aqueous solution of sodium hypochlorite which is supplied to said auxiliary device (2).

4. The process for pretreating raw water according to claim 2 or 3, further comprising a step of production, in a supplementary device, of an aqueous solution of sodium hypochlorite which is supplied to said second auxiliary device (3).

5. The process for pretreating raw water according to any one of claims 1 to 4, said process being carried out continuously.

6. The process for pretreating raw water according to any one of claims 1 to 5, wherein said second auxiliary device (3) is supplied with intermittent current, preferably regularly cut, more preferably with a frequency ranging from 0.1 to 1 Hz.

7. The process for pretreating raw water according to claim 2 or any one of claims 3 to 6 when referring to claim 2, wherein electro-magnet (44) is connected to a source of alternating current.

8. The process for pretreating raw water according to any one of claims 1 to 7, wherein said biological filter further comprises, for each of said aerobic (16) and anaerobic (21) filtration compartments, a line for bacterial inoculation (31,32) and wherein raw water and/or an aqueous bacterial preparation is dropwise introduced into said aerobic (16) and anaerobic (21) filtration compartments, by means of said lines for bacterial inoculation (31,32).

9. A plant for pretreating raw water, comprising:
1) a filtration device (1) including, from upstream to downstream:
• a flow straightener (4),
• a coalescer(7),
• a lamellar settling tank (12),
• a biological filter having an inlet (15) and an outlet (28), said biological filter comprising an aerobicfiltration compartment (16) connected to an anaerobic filtration compartment (21),
• a separator (27),
2) an auxiliary device (2) comprising a tank containing:
- an aqueous solution containing sodium hypochlorite and
- an anode comprising a metallic receptacle (46) containing iron particles, at least some of them being immersed in said aqueous solution containing sodium hypochlorite and
- a cathode (47) having a least a part which is immersed in said aqueous solution containing sodium hypochlorite,
- at least a portion of said immersed part of said cathode (47) being above at least some of said immersed iron particles,
- the outlet (8) of said auxiliary device (2) being connected to said coalescer (7) of said filtration device (1).

10. The plant for pretreating raw water according to claim 9, further comprising :
- a second auxiliary device (3) comprising a tank containing :
- an anode comprising a metallic receptacle (46bis) containing iron particules, at least some of them being immersed in said aqueous solution containing sodium hypochlorite and
- a cathode (47bis) having at least a part which is immersed in said aqueous solution containing sodium hypochlorite,
- at least a portion of said immersed part of said cathode (47bis) being above at least some of said immersed iron particles,
- an electro-magnet or a solenoid coil (44) surrounding said metallic receptacle containing said iron particles,
- the inlet (37) of said second auxiliary device (3) being connected to the outlet (30) of said raw water filtration device (1).

11. The plant for pretreating raw water according to claim 9 or 10, further comprising a supplementary device for producing a sodium hypochlorite aqueous solution which is supplied to a tank (34) connected to an inlet (35) of said auxiliary device (2).

12. The plant for pretreating raw water according to claim 10 or 11, further comprising a supplementary device for producing an aqueous solution of sodium hypochlorite which is supplied to a tank (34) which is connected to a line (48) connected to said inlet line (37) of said second auxiliary device (3).

13. The plant for pretreating raw water according to any one of claims 9 to 12, wherein said cathode (47,47bis) has a substantially planar form.

14. The plant for pretreating raw water according to any one of claims 9 to 12, wherein said cathode (47,47bis) has the form of a grid.

15. The plant for pretreating raw water according to any one of claims 9 to 14, wherein said metallic receptacle(s) (46, 46bis) is/are at least partially made of titanium, zirconium, a titanium alloy or a zirconium alloy.

16. The plant for pretreating raw water according to any one of claims 9 to 15, wherein said cathode(s) (47,47bis) comprise(s) on its/their face facing said iron particles, a separation element, preferably an insulating porous material, particularly a porous textile, for example made of polyethylene or polypropylene.

17. The plant for pretreating raw water according to any one of claims 9 to 16, further comprising stirring means for said metallic receptacles (46,46bis).

18. The plant for pretreating raw water according to any one of claims 9 to 17, further comprising an electro-magnet or a solenoid coil (44) surrounding said metallic receptacle (46bis) of said second auxiliary device (3) containing said iron particles.

19. The plant for pretreating raw water according to any one of claims 9 to 18, wherein the interior of said metallic receptacle (46bis) of said second auxiliary device (3) is at least partially recovered with a catalyst layer, preferably made of palladium.

20. The plant for pretreating raw water according to any one of claims 9 to 19, wherein said aerobic (16) and anaerobic (21) filtration compartments comprise hydrophobic and oleophilic fibers.

21. The plant for pretreating raw water according to claim 20, wherein said hydrophobic and oleophilic fibers comprise polypropylene fibers.

22. The plant for pretreating raw water according to any one of claims 9 to 21, further comprising, upstream of said aerobic filtration compartment (16), a pipe (17) for feeding air, oxygen or a suitable mixture of gases mntaining oxygen.

23. The plant for pretreating raw water according to any one of claims 9 to 22, wherein said separator (27) comprises porous curtains.

24. The plant for pretreating raw water according to any one of claims 19 to 23, wherein said porous curtains are made of polypropylene.

25. The plant for pretreating raw water according to any one of claims 9 to 24, further comprising stirring means for said aerobic (16) and anaerobic (21) filtration compartments.

26. The plant for pretreating raw water according to any one of claims 9 to 24, wherein said biological filterfurther comprises, for each of said aerobic (16) and anaerobic (21) filtration compartments, a line for bacterial inoculation (31,32).
